(19) Europäisches Patentamt
European Patent Office
Office européen des brevets

(11) **EP 3 585 853 B1**

(12) **EUROPÄISCHE PATENTSCHRIFT**

(45) Veröffentlichungstag und Bekanntmachung des Hinweises auf die Patenterteilung:
**04.10.2023 Patentblatt 2023/40**

(21) Anmeldenummer: **18707024.8**

(22) Anmeldetag: **22.02.2018**

(51) Internationale Patentklassifikation (IPC):
**C09J 11/08** (2006.01)     **C09J 5/00** (2006.01)
**C09J 7/10** (2018.01)

(52) Gemeinsame Patentklassifikation (CPC):
**C09J 11/08; C09J 5/00; C09J 7/10;**
C09J 2301/416; C09J 2463/00

(86) Internationale Anmeldenummer:
**PCT/EP2018/054383**

(87) Internationale Veröffentlichungsnummer:
**WO 2018/153985 (30.08.2018 Gazette 2018/35)**

(54) **WICKEL- UND STANZBARER KLEBENDER FILM**

ADHESIVE FILM THAT CAN BE WOUND AND STAMPED

FILM ADHÉSIF ENROULABLE ET EMBOUTISSABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.02.2017 DE 102017001696**

(43) Veröffentlichungstag der Anmeldung:
**01.01.2020 Patentblatt 2020/01**

(73) Patentinhaber: **Lohmann GmbH & Co. KG**
**56567 Neuwied (DE)**

(72) Erfinder:
• **KOPF, Patrik**
**56567 Neuwied (DE)**
• **KÜHL, Oliver**
**56587 Straßenhaus (DE)**

(74) Vertreter: **Okoampah, Rene**
**df-mp Dörries Frank-Molnia & Pohlman**
**Patentanwälte Rechtsanwälte PartG mbB**
**Theatinerstraße 16**
**80333 München (DE)**

(56) Entgegenhaltungen:
EP-A2- 0 819 746        EP-A2- 0 819 746
US-A1- 2005 256 230     US-A1- 2005 256 230

**Beschreibung**

Technisches Gebiet

Bei der vorliegenden Erfindung handelt es sich um einen durch ultraviolette Strahlung (UV) aktivierbaren und härtbaren klebenden Film für strukturelle Verklebungen, welcher im nicht aktivierten Zustand haftklebend ist.

Die in den nachfolgenden Ausführungen verwendeten Begriffe sind dabei wie folgt zu verstehen:
Mit "klebender Film" ist im Folgenden jede Form von flächigen klebenden Systemen gemeint, also nicht nur Klebebänder im engeren Sinne, sondern auch Klebefolien, Klebestreifen, Klebeplatten oder klebende Stanzteile.

"Haftklebend" werden solche Klebeverbindungen genannt, bei denen die beiden Fügepartner durch eine dazwischen liegende Klebeschicht und unter Druck miteinander verbunden werden. Die Verbindung ist in der Weise reversibel, dass sie wieder gelöst werden kann, ohne die beiden Fügepartner zu beschädigen, weil die Klebenaht die schwächste Stelle in der Fügeverbindung ist.

Als "strukturell" werden Klebeverbindungen bezeichnet, bei denen die Fügepartner in der Weise miteinander verbunden werden, dass bei einer Trennung die Verbindung nicht unbedingt an der Klebenaht gelöst wird, sondern unter Umständen auch einer der Fügepartner die schwächste Stelle in der Verbindung sein kann und durch die Trennung dann beschädigt wird. Strukturelle Klebeverbindungen besitzen also hohe Festigkeiten. Die Festigkeiten, gemessen im quasistatischen Zugscherversuch, liegen bei strukturellen Verbindungen über 6 MPa. Übliche Werte, die für strukturelle Klebeverbindungen von Epoxidklebstoffen angestrebt werden, liegen bei 10 bis 20 MPa.

"Strahlenhärtung" bezeichnet einen Prozess, bei dem mit Hilfe von energiereicher Strahlung reaktive Materialien von einem niedermolekularen in einen hochmolekularen Zustand überführt werden.

Unter UV-Strahlung wird im vorliegenden Falle "UVA"- oder "UVC"-Licht verstanden.

UVA-Strahlung liegt im Wellenbereich von ca. 380 bis 315 Nanometer (nm), UVC-Strahlung liegt im Wellenbereich von ca. 280 bis 100 nm. Generell handelt es sich bei beiden um elektromagnetische Strahlung mit Wellenlängen, die kürzer als das sichtbare Licht sind. Beim UVA-Licht liegt der Energieeintrag bei ca. 3,26 bis 3,95 Elektronenvolt (eV), beim UVC-Licht bei ca. 4,43 bis 12,40 eV.

"Aktivierung" bedeutet, dass der Klebstoff nach Bestrahlung mit UV-Licht beginnt auszuhärten, d.h. die im Klebstoff befindlichen Fotoinitiatoren werden durch Lichteinstrahlung aktiviert und stoßen den Aushärteprozess an, indem sie die Bildung von Polymerketten einleiten. Üblicherweise werden UV- härtende Klebstoffe nach der Fügung der Klebepartner bestrahlt. Dazu bedarf es Substraten, die ausreichend durchlässig sind für die verwendete UV-Strahlung. Die Klebestelle wird dann so lange bestrahlt, bis die Aushärtung ausreichend fortgeschritten ist. Nachteilig ist zum einen, dass Substrate, die nicht durchlässig sind, so nicht verklebt werden können und zum anderen, dass die Bestrahlungszeiten relativ lange sind.

"Offene Zeit" bzw. "Offenzeit" ist die Zeit zwischen Klebstoffauftrag und Verklebung. In der Offenzeit verteilt sich beispielsweise ein flüssiger Schmelzklebstoff auf den zu verbindenden Oberflächen und sorgt für die nötige Haftung (Adhäsion). Da sich die Viskosität, d.h. die Zähflüssigkeit eines Klebstoffes nach dem Auftrag in der Regel erhöht, ist die Offenzeit bei Klebstoffen zeitlich begrenzt.

Die "Aushärtezeit" ist der Zeitraum zwischen der Fügung der Fügepartner und der endgültigen Festigkeit der Verbindung.

Mit "Dunkelreaktion" wird in der Folge die Tatsache bezeichnet, dass eine Härtungsreaktion durch kurzzeitige Bestrahlung des Klebstoffes mit UV-Licht angestoßen (angetriggert) wird und dann die komplette Aushärtung ohne weitere Bestrahlung erfolgt.

Stand der Technik

Oftmals besteht die Basis von UV-härtenden Klebstoffen aus Acrylatmonomeren oder - oligomeren, die in einer durch UV-Licht induzierten Radikalkettenreaktion aushärten.

Dagegen werden UV-härtende Epoxidklebstoffe durch einen kationischen Photoinitiator gehärtet. Bei der kationischen UV-Härtung findet eine Ringöffnung am Oxiran und/oder Oxe-tan (Epoxidharze und Vinylether) statt. Dies geschieht durch Photolyse von z.B. Diaryliodoniumsalzen, die eine Erzeugung von starken Protonensäuren nach sich zieht. Das Säureproton öffnet den Epoxidring und startet das Kettenwachstum und damit die Härtung.

Im Gegensatz zur radikalischen UV-Härtung von Acrylaten führt dies zu einem niedrigeren Schrumpf und einer guten Haftung auf einer Vielzahl von Substraten. Ein weiterer Vorteil der kationischen Härtung ist die Unempfindlichkeit gegenüber Sauerstoff, wodurch hohe Härtungsgeschwindigkeiten unter normalen Luftbedingungen möglich sind. Feuchtigkeit und Alkali haben dagegen einen tendenziell höheren Einfluss als bei der radikalischen UV-Härtung.

Bei einer kationischen Initiierung ist es unter Umständen möglich, die Kettenbildung soweit zu verzögern, dass sie schließlich ohne weitere Strahlenexposition im Dunkeln ablaufen kann. Eventuell kann sie auch stark verzögert werden, so dass sie erst durch eine Wärmebehandlung wieder in Gang kommt oder beschleunigt wird. Eine "Triggerbestrahlung", also ein kurzes Anstoßen durch Bestrahlung reicht aus, um die Aushärtung zu starten. In der folgenden Dunkelreaktion - außerhalb des UV-Lichts - findet dann die weitere Aushärtung statt. Eventuell ist es sogar möglich, dass eine gewisse "Offenzeit" entsteht, das heißt, dass zunächst auf die offene Klebeschicht bestrahlt wird und danach noch Zeit bleibt, die Fügung mit dem zweiten Substrat vorzunehmen, ohne eine Verminderung der Verbundeigenschaften zu erhalten. Diese Vorgehensweise würde es dann erlauben, auch Substrate zu fügen, die nicht UVtransparent sind.

Ein Modell nimmt an, dass die Härtung zunächst an der Oberfläche der Klebmasse stattfindet und dann allmählich voranschreitet. Die Säure kann durch die noch flüssige Schicht diffundieren, so dass auch Stellen gehärtet werden, die nicht direkt belichtet wurden. Kationische Photoinitiatoren wie z.B. die Iodoniumsalze können auch durch Sensibilisatoren wie z.B. Thioxanthon-Derivate in ihrer Ausbeute oder ihrem Wellenlängenbereich verbessert werden.

Epoxide umfassen eine chemische Stoffgruppe sehr reaktionsfähiger cyclischer organischer Verbindungen. Sie enthalten einen Dreiring, bei dem im Vergleich zum Cyclopropan ein Kohlenstoff- durch ein Sauerstoffatom ersetzt ist. Epoxidgruppen bilden somit die einfachsten sauerstoffhaltigen Heterocyclen. Die Sauerstoffbrücke wird als Epoxybrücke bezeichnet.

In industriellen Anforderungen allgemein werden immer höhere Ansprüche an Klebeverbindungen beispielsweise bezüglich Bruchkraft, Temperaturbeständigkeit, Klimawechselbeständigkeit, Feucht- Wärmebeständigkeit etc. gestellt. Ursache hierfür ist, dass zunehmend Klebebänder in immer größerer Menge im Automobilbau eingesetzt werden, z.B. aus Gewichtsgründen oder auch weil damit nicht unbedingt punktförmige Verbindungen geschaffen werden müssen, sondern eine gleichmäßige Verteilung der Fügekraft über eine Klebstoffnaht erfolgt und nicht zuletzt auch, weil die Fügepartner nicht beschädigt werden, wie dies bei gewissen anderen Fügeverfahren wie beispielsweise Verschraubungen oder Vernietungen der Fall ist.

In Bezug auf die genannten Anforderungen ist ein Haftklebeband nicht in der Lage, diese zu erfüllen.

Diese Anforderungen lassen sich hingegen häufig durch strukturelle Klebebänder verwirklichen. Oftmals werden diese strukturellen Klebebänder nach der Fügung in einem Hitzeprozess ausgehärtet. Wenn nun aber der Klebstoff bzw. das Klebeband nicht heiß-härtend sein darf, da die zu verklebenden Substrate keine oder nur eine sehr geringe Wärmeeinwirkung vertragen, die zur Aushärtung nicht ausreicht, muss ein Klebstoff bzw. ein Klebeband Verwendung finden, das einem anderen Härtungsmechanismus unterliegt.

Die heute bekannten heiß härtenden Epoxidklebebänder sind in der Lagerstabilität beschränkt. Trotz Härtungstemperaturen jenseits der 120°C findet über längere Zeit auch bei Raumtemperatur eine nachteilige Veränderung der Klebebänder statt. Deshalb müssen sie vor Gebrauch meist kühl gelagert oder eingefroren werden. Das Lagerproblem verschärft sich noch, wenn Härtungssysteme verwendet werden, die bei geringeren Härtungstemperaturen bis hin zu Raumtemperatur aktivierbar sind. Dort wäre die Lagerstabilität der Klebebänder noch schlechter, was für industrielle Lager-und Prozesszeiten die Verwendbarkeit derartiger Klebebänder zusätzlich einschränkt.

Es wäre deshalb von großem Nutzen, wenn ein UV-härtbares Klebeband zur Verfügung wäre, das bei Raumtemperatur lagerstabil ist, bevorzugt allein durch UV-Licht, d.h. ohne großen zusätzlichen Wärmeeintrag aushärtet und bei der Aushärtung eine Offenzeit besitzt, die das Fügen nach der UV- Bestrahlung zulässt, wobei die Aushärtung zu einer strukturellen Klebeverbindung führt.

Durch UV-Licht aktivierte, kationisch initiierte Epoxid-Klebstoffe sind auch aus der Literatur bereits bekannt. So beschreibt WO 2015/198921 A1 eine photohärtbare Zusammensetzung für optische transparente Systeme aus einem Epoxid mit einer alicyclischen Epoxy-Gruppe ohne Esterverbindung, einer Oxetan-Verbindung, einem photokationischen Polymerisationsinitiator mit einem Phosphor oder Boron enthaltenden Anion sowie einem anorganischen Füllstoff. Verwendung findet dieser Klebstoff beim Fügen optischer Elemente. So wird beispielsweise der Klebstoff auf eine erste Lage eines optischen Systems aufgetragen, sodann eine zweite Lage auf die Klebstoffschicht aufgebracht und der Verbund schließlich mit UV-LED-Licht bestrahlt, wodurch der Klebstoff aushärtet und der Verbund hergestellt wird. Ein solcher Verbund kann auch aus mehr als zwei Lagen mit jeweils zwischen zwei Lagen befindlichem Klebstoff bestehen. In ähnlicher Weise hergestellte optische Filme beispielsweise für LCDs beschreiben WO 2102173055 A1 und JP 05498870 B2. Von einer Offenzeit und der Fügung von nicht-transparenten Substraten ist nicht die Rede.

JP 2015057467 A beansprucht einen zumindest eine Kunststofflage enthaltenden zweischichtigen Verbund, der hergestellt wird durch Auftragen eines Klebstoffs mit einem kationischen Photoinitiator auf eine Kunststoffschicht, Aufbringen einer zweiten Lage auf die Klebstoffschicht und Aushärtung des Klebstoffs durch Bestrahlung von der Seite her. Eine Bestrahlung von der Seite umgeht zwar das Problem der Transparenz der Substrate, lässt sich aber nur für kleinere Flächen verwirklichen.

Weitere Anwendungen für kationisch initiierte Epoxysysteme in Form von transparenten Beschichtungen von Etiketten oder Lackierungen von Dosen oder anderen Behältern sind Thema von beispielsweise CN 102708755 A und JP 2009185219 A. Eine härtbare Zusammensetzung gebildet durch das Mischen eines Epoxidharzes und eines thermoplastischen Ethylen-Vinylacetat- Copolymerharzes mit einem organometallischen Kation für das härtbare Epoxidharz ist Gegenstand der WO 1999/057216 A1. DE 19857237 A1 beschreibt die Herstellung von Folienverbundstoffen mittels eines zumindest dreikomponentigen Klebstoffs, bei dem eine Komponente mindestens eine Verbindung mit mindestens einer Epoygruppe enthält und eine weitere Komponente mindestens einen kationischen Photoinitiator, der nach Bestrahlung mit Licht eine Polymerisation der mindestens zwei übrigen Komponenten initiiert.

Ein Haftklebstoff bestehend aus einem Acrylatpolymer, einer photopolymerisierbaren Verbindung mit einer Epoxygruppe und einem kationischen Photopolymerisationsinitiator wird in EP 819746 B1 und EP 1249479 B1 beansprucht. Das Acrylatpolymer verleiht dem Verbund eine anfängliche Kohäsionsstärke und ist ausreichend klebrig, um leicht an einem Fügeteil anzuhaften. Nach der Anhaftung wird der Haftklebstoff mit Licht bestrahlt, wodurch der Polymerisationsinitiator aktiviert und eine ringöffnende Polymerisation der mindestens eine Epoxygruppe enthaltenden photopolymerisierbaren Verbindung bewirkt wird. Die Bestrahlung findet hier nach der Fügung statt.

Eine Reihe von Schutzrechten beschreibt lichtinduzierte, dunkelhärtende Flüssigklebstoffe, z.T. mit verzögerter Härtung, so beispielsweise WO 2006/029059 A1 oder US 20050256230 A1, andere wie US 20030176585 A1 oder US 7053133 B2 beanspruchen einen Film, dessen Härtung ohne Verzögerung erfolgt bzw. durch einen Inhibitor verzögert wird. Ein thermisch leitfähiges, einen wärmeleitfähigen Füllstoff enthaltendes Epoxidband ist Thema der WO 2014/047932 A1. Allerdings werden hier keine strukturellen Festigkeiten erreicht. WO 2014/093414 A1 beansprucht einen Epoxid klebstofffilm mit einer zunächst nur 50%igen Härtung, die endgültige Aushärtung erfolgt dann unter Wärmeeinwirkung. Dazu werden Temperaturen über 100°C benötigt. Der Stand der Technik schweigt bezüglich einer Klebstoffrezeptur auf Basis Epoxidharz, bei der zur Aktivierung außer dem kationischen Fotoinitiator kein weiterer Initiator als Radikalstarter notwendig ist. Ferner schweigt der Stand der Technik bezüglich eines diesen Klebstoff enthaltenden bzw. umfassenden klebenden Films, der bereits im nicht aktivierten Zustand leicht haftklebend ist, bei dem der Klebstoff keine Wärme zur Aushärtung benötigt, nur durch Bestrahlung mit UV- Licht aktiviert wird und ohne Zusatz eines entsprechenden Inhibitors zeitverzögert aushärtet und eine strukturelle Verbindungsfestigkeit erzeugt.

Darstellung der Erfindung

Ausgehend von dem bekannten Stand der Technik ist es eine Aufgabe der vorliegenden Erfindung, einen verbesserten Wickel- und stanzbaren klebenden Film bereitzustellen.

Diese Aufgabe wird mittels einer Vorrichtung mit den Merkmalen des Anspruchs 1 gelöst. Vorteilhafte Ausgestaltungen ergeben sich aus den Unteransprüchen.

Entsprechend wird ein Wickel- und stanzbarer klebender Film mit einer durch UV-Strahlung aktivierbaren Klebmasse auf Basis von Epoxid angegeben. Erfindungsgemäß umfasst die Klebemasse:

a) 2 - 40 Gew.-% Filmbildner,
b) 10 - 70 Gew.-% aromatische Epoxidharze,
c) cycloaliphatische Epoxidharze, wobei die cycloaliphatischen Epoxidharze 35 Gew.- % nicht überschreiten,
d) 0,5 - 7 Gew.-% kationische Initiatoren,
e) 0 - 50 Gew.-% epoxidierter Polyetherverbindungen, und
f) 0 - 20 Gew.-% Polyol,

wobei sich die Anteile zu 100% addieren, und wobei die Klebemasse nach der UV-Aktivierung eine Offenzeit von 10 Sekunden bis 60 Minuten aufweist, während der der Film eine haftklebende Eigenschaft aufweist.

Überraschenderweise wurde gefunden, dass durch die erfindungsgemäße Zusammensetzung einen klebenden Film (Klebeband) produziert werden kann, dessen Aushärtung durch Bestrahlung des offen liegenden klebenden Films angestoßen wird, der nach einer Offenzeit von 10 Sekunden bis 60 Minuten gefügt werden kann und schließlich zu einer strukturellen Verbundfestigkeit führt. Außerdem ist der klebende Film unter Normalbedingungen stabil. Das bedeutet, dass die Herstellung und die Handhabung ohne weiteren UV-Schutz unter Raumlichtbedingungen möglich sind. Außerdem ist der klebende Film - UV-geschützt verpackt - bei Raumtemperatur über Monate lagerstabil.

In einer bevorzugten Ausführungsform beträgt die Lagerfähigkeit des ungehärteten klebenden Films bei Zimmertemperatur mindestens 6 Monate, ohne die Funktionstüchtigkeit negativ zu beeinträchtigen.

Ein wesentlicher Bestandteil des klebenden Films ist ein Filmbildner. Er ermöglicht, dass ein wickel- und stanzbarer Film entsteht. Beim Filmbildner handelt es sich um thermoplastische oder elastomere Polymerverbindungen, die die Viskosität regeln, so dass nach der Beschichtung und evtl. Trocknung ein wickel- und stanzbarer Film entsteht. Als Filmbildner kommen z.B. folgende Polymere in Frage: Acrylate, Polyamide, Phenoxyharze, Polyurethane oder Ethylenvinylacetate (EVAs), wobei bevorzugt Polyurethane und Ethylenvinylacetatcopolymere verwendet werden.

Als Epoxidharze werden aromatische, aliphatische und cycloaliphatische Epoxidharze eingesetzt. Sie können in ihrer Viskosität flüssig, hochviskos oder fest sein. Bevorzugt ist der Anteil der aromatischen Harze, gemessen am Anteil des Epoxidäquivalents der Mischung, höher als der Anteil der cycloaliphatischen Epoxidharze. Der Anteil des Epoxidäquivalents der cycloaliphatischen Epoxidharze am Epoxidäquivalent aller Epoxidharze liegt maximal bei 25%.

In einer weiter bevorzugten Ausführungsform liegt der Anteil des Epoxidäquivalents der aromatischen Epoxidharze am Epoxidäquivalent aller Epoxidharze über 60%. Dadurch sind Offenzeiten von 10 Sekunden bis 60 Minuten möglich.

Des Weiteren enthält der klebende Film zumindest eine Polyetherverbindung, die mit Epoxidgruppen derivatisiert ist. Es handelt sich dabei bevorzugt um epoxidierte Polyethylenglykole oder Polypropylenglykole. In einer bevorzugten Ausführungsform beträgt der Anteil des Epoxidäquivalents der epoxidierten Polyetherverbindungen am Epoxidäquivalent aller Epoxidharze zwischen 0 und 40%. Über den Anteil der Polyetherverbindungen kann wirksam die Offenzeit eingestellt werden.

Eine weitere Komponente des klebenden Films sind Verbindungen mit mehreren freien Hydroxygruppen (Polyole), beispielsweise Polyethylenglykole, Polytetrahydrofuran oder Polypropylenglykole. Laut Literatur ist der Zusatz von Polyolen für eine Verzögerung der Aushärtereaktion verantwortlich (A. Hartwig, "Kationisch härtende Epoxidharzklebstoffe", Februar 2012). Durch Übertragungsreaktionen verlängere sich die Aushärtungsreaktion, so dass eine Dunkelreaktion resultiere. Zusammen mit den epoxidierten Polyethern sind demnach die Polyole für die Steuerung der Offenzeit und der Geschwindigkeit der Vernetzungsreaktion nützlich.

Als Initiatoren für den klebenden Film werden kationische Photoinitiatoren eingesetzt. Es eignen sich beispielsweise Arylsulfonium, Iodonium, Ferrocenium oder Thioxatheniumsalze, besonders bevorzugt sind Triarylsulfoniumsalze. Diese zeichnen sich durch eine schnelle Zerfallsreaktion schon bei relativ geringer UV-Bestrahlung aus. Beim Zerfall der Initiatoren bilden sich Säuren, die die Epoxidharze aushärten.

Als weitere Komponenten für den klebenden Film kommen die dem Fachmann bekannten Zusatzstoffe für Epoxidklebebänder in Frage: Schlagzähmodifikatoren, organische oder anorganische Füllstoffe, auch funktionelle Füllstoffe wie zum Beispiel Flammschutzmittel, Farbstoffe, Alterungsschutzmittel, Verlaufs- und Rheologiehilfsmittel.

Der fertige klebenden Film kann als einlagiger Film vorliegen (als sogenanntes Transferklebeband), er kann aus einem einseitig mit der Klebemasse beschichteten Träger (z.B. aus Folie, Papier oder Textil) oder aus einem zweiseitig beschichteten Träger oder aus zwei aufeinander liegenden verschiedenartigen Klebemasseschichten bestehen. Außerdem umfasst die Erfindung die Kombination der vorliegenden klebenden Filme mit anderen klebenden Schichten wie zum Beispiel haftklebenden oder schmelzklebenden Schichten, wiederum mit oder ohne Träger.

Üblicherweise sind auch Abdeckungen (Release Liner) Bestandteil von Klebebändern bzw. klebenden Filmen. Hier können prinzipiell alle allseits bekannten Arten von Release Linern eingesetzt werden.

Die Verarbeitung und Beschichtung der Klebemasse kann über einen Lösemittel- oder Hotmeltprozess erfolgen. Auch über die sogenannte Syruptechnologie, bei der der filmbildende Anteil erst bei der Beschichtung aus Monomeren oder Oligomeren aufgebaut wird, sind die Verarbeitung und Beschichtung möglich.

Der klebende Film ist im nicht aktivierten Zustand haftklebend und kann so bei der Verarbeitung wie ein "normales" Haftklebeband behandelt werden, d.h. er kann leicht haftend appliziert und gegebenenfalls auch repositioniert werden. Aus dem klebenden Film können Stanzteile gefertigt werden, die auf den jeweiligen zu verklebenden Teilen vorappliziert werden können.

Die Härtung der vorapplizierten klebenden Filme und Stanzteile wird schließlich durch UV-Licht aktiviert, bevorzugt durch UVA- oder UVC-Licht. Erst dann werden die Fügepartner endgültig und strukturell gefügt. Da die Härtungsreaktion in mehreren Schritten abläuft, ist auch nach der Aktivierung noch eine gewisse Zeitspanne vorhanden, während der die Fügeteile endgültig ausgerichtet und gefügt werden können, eine weitere Aktivierung nach dem Anstoßen der Härtung durch UV-Licht ist nicht mehr notwendig.

Die Dauer des Ablaufs der Dunkelreaktion hängt stark von verschiedenen Faktoren ab, z.B. der eingesetzten Harzkomponente (cycloaliphatisches oder aromatisches Epoxidharz), der Kettenlänge, dem Initiatortyp, der Bestrahlungszeit, der Betrahlungsdosis (UV-Wellenlänge) oder auch der Temperatur. Die Aushärtezeit nach der Bestrahlung kann in Abhängigkeit von den genannten Faktoren und deren Zusammenspiel zwischen 10 Sekunden und 60 Minuten betragen.

In einer bevorzugten Ausgestaltung ist der Wickel- und stanzbare klebende Film insbesondere zur strukturellen Verklebung von Metallen, Glas, Keramiken, Glasfaserkunststoff (GFK), Kohlefaserkunststoff (CFK) und weiteren höher energetischen Oberflächen geeignet.

In einer weiter bevorzugten Ausführungsform weist der Wickel- und stanzbare klebende Film in Abhängigkeit von Formulierungsdetails, Strahlendosis und zu verklebenden Substraten bei der Verklebung Festigkeiten zwischen 6 und 20 MPa auf.

Kurze Beschreibung der Figuren

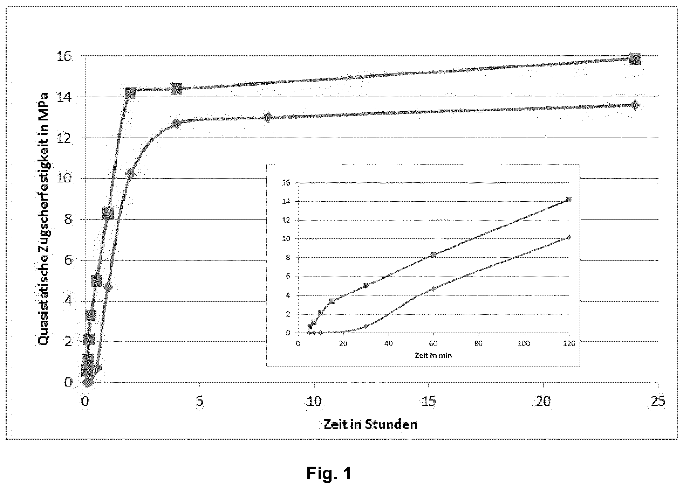

Figur 1 zeigt den Kurvenverlauf der Aushärtung bei zwei verschiedenen Rezepturen.

Detaillierte Beschreibung bevorzugter Ausführungsbeispiele

Verwendete Materialien

| Bezeichunng | Art | Bezug |
|---|---|---|
| Desmomelt 530 | Filmbildner, Polyesterpolyurethan | Fa. Covestro |
| Levamelt 900 | Filmbildner, Ethylvinylacetat | Fa. Lanxess |
| Levamelt 456 | Filmbildner, Ethylvinylacetat | Fa. Lanxess |
| Phenoxy Resin PKHM-301 | Filmbildner, Phenoxyharz | Fa. Gabrielchem |
| Araldite GT 7072 N | Aromatisches Epoxidharz, fest, Schmelzpunkt 89°C, Epoxidäquivalent 570-585 g/eq | Fa. Huntsman |
| D.E.R. 331 | Aromatisches Epoxidharz, Flüssigharz, hochviskos, Epoxidäquivalent 182-192 g/eq | Fa. Olin |
| Uvacure 1534 | Cycloaliphatisches Epoxidharz, Epoxidäquivalent 190-210 g/eq | Fa. Allnex |
| D.E.R. 736 P | Epoxidierte Polyetherverbindung (Propylenglykol-Epichlorhydrin-Copolymer), Epoxidäquivalent 150-205 g/eq | Fa. Olin |
| Araldite DY 3601 | Epoxidierte Polyetherverbindung (Polypropylenglykoldiglycidylether), Epoxidäquivalent 385-405 g/eq | Fa. Huntsman |
| Heloxy Modifier WF | Epoxidierte Polyetherverbindung (Butylenglykoldiglycidylether), Epoxidäquivalent 380-420 g/eq | Fa. Hexion |
| PEG 400 | Polyethylenglykol | Fa. BASF |
| Chivacure 1176 | Kationischer UV-Initiator, Basis Triarylsulfoniumsalz | Fa. Chitec |
| Chivacure 1190 | Kationischer UV-Initiator, Basis Triarylsulfoniumsalz | Fa. Chitec |
| Omicat 432 | Kationischer UV-Initiator, Basis Triarylsulfoniumsalz | Fa. IMG Resins |
| Omicat 550 BL | Kationischer UV-Initiator, Basis Thioxanthenium | Fa. IMG Resins |
| UV 387 C | Kationischer UV-Initiator, Basis Iodoniumsalz | Fa. Deuteron |
| Chivacure 2-ITX | UV-Sensitizer, um die Lichtausbeute zu erhöhen | Fa. Chitec |

Herstellung der klebenden Filme und deren UV-Aktivierung

Alle Prozentangaben beziehen sich auf Gewichtsprozent.

Zubereitung des klebenden Films:

Klebemasse:

Der Filmbildner wird in einem geeigneten Lösemittelgemisch vorgelöst, gegebenenfalls unter leichtem Erwärmen der Mischung. Anschließend werden die restlichen Komponenten (Epoxidharze, epoxidierte Polyetherverbindung, Polyol und UV-Initiator) separat in einem geeigneten Lösemittelgemisch gelöst. Anschließend werden die beiden Lösungen unter Rühren vereinigt. Die Lösemittel oder Lösemittelgemische werden aus denen dem Fachmann bekannten Lösemitteln so gewählt, dass die Komponenten gut löslich bzw. dispergierbar sind, beziehungsweise eine geeignete Mischung ergeben, deren Viskosität so ist, dass die Mischung auf einen Film oder Träger beschichtet werden kann. Das Verhältnis von Lösemittelgemisch zu restlichen Komponenten wird so gewählt, dass eine beschichtbare Viskosität resultiert und die losemittelhaltige Klebemasse ausreichend stabil ist zwischen Herstellung und Beschichtung. Für die Beispielrezepturen werden folgende Lösemittel verwendet: Filmbildner: Desmomelt 530 und Phenoxy Resin PKHM-301: Methylethylketon, Levamelt-Typen: Ethylacetat, Restliche Komponenten: Ethylacetat. Der Feststoffgehalt der fertigen Klebemasselösungen beträgt 50-70 %.

Beschichtung:

Die lösemittelhaltige Klebemasse wird mittels Rakel auf eine silikonisierte Polyesterfolie (Dicke 50 μm) aufgetragen. Danach wird das ganze zunächst 10 Minuten bei Raumtemperatur und anschließend 10 Minuten bei 80°C im Umluftofen getrocknet. Die Auftragsmenge wird so eingestellt, dass nach dem Trocknen (Entfernen des Lösemittelgemisches) eine Schichtdicke von 50 μm resultiert.

Man erhält einen haftklebrigen (klebrigen) Film mit einer Dicke von ca. 50 μm.

Für die Handhabung der Rohstoffe, des Klebstoffs und für die Beschichtung sind keine Schutzmaßnahmen gegen UV-Licht notwendig. Es reicht, in normaler Laborumgebung entfernt von der UV-Lampe zu arbeiten. Eine weitere Abschirmung wird nicht vorgenommen.

UV-Bestrahlung des haftklebrigen Films:

Der haftklebrige Film wird in eine Größe von ca. 312 mm$^2$ (25 mm breit, 12,5 mm lang) auf das erste Substrat (Platte aus glasfaserverstärktem Kunststoff GFK, 100 mm lang, 25 mm breit, 2 mm dick) aufgeklebt. Anschließend wird die silikonisierte Polyesterfolie abgezogen. Dieses Substrat wird dann mit UV-Licht bestrahlt (entweder UV-C-Licht aus einer Entladungslampe oder UV-A-Licht aus einer UV-A-LED-Quelle). Nach der Bestrahlung wird während der Offenzeit und außerhalb der Bestrahlungszone auf den offenen klebenden Film das zweite Substrat aufgedrückt (der klebende Film ist auch nach der Bestrahlung noch haftklebrig), so dass die beiden Substrate überlappen und die Verklebungsfläche 25 mm x 12,5 mm beträgt. Die beiden Substrate werden mit Klammern fixiert und bei Raumtemperatur gelagert. Die Messung der Zugscherfestigkeit erfolgt dann mit diesem Prüfling, soweit nicht anders vermerkt, nach 24 Stunden.

Die UV-Bestrahlung erfolgt, soweit nicht anders angegeben, mit einer UV-Laboranlage der Fa. Beltron mit Transportband und UV-C-Strahler mit einem Strahlungsmaximum bei 256 nm. Das Transportband wird mit 2 m/min betrieben. Die Bestrahlungsdosis im UV-C-Bereich, gemessen mit einem UV Power Puck II der Fa. EIT Instrument Market Group, beträgt 197 mJ/cm$^2$.

Versuche mit einer UV-A-Lampe werden mit der LED Spot 100 der Fa. Hönle durchgeführt. Sie besteht aus eine UV-LED (Wellenlänge 365 nm) und einer Bestrahlungskammer. Die Prüflinge werden 15 Sekunden in der Bestrahlungskammer bestrahlt. Die Bestrahlungsdosis, gemessen mit einem UV Power Puck II der Fa. EIT Instrument Market Group, beträgt 5000 mJ/cm$^2$.

Anmerkung:

Trotz deren deutlich höherer Wellenlänge können die Klebemassen auch mit der UV-LED-Anlage aktiviert werden. Es sind ähnliche Bestrahlungszeiten wie bei der UV-C-Anlage möglich und die Ergebnisse in Offenzeit und Verklebungsfestigkeit liegen im gleichen Bereich. Vermutlich gleicht die deutlich höhere Intensität der UV-A-Strahlung die kleineren Energiequanten aus, so dass die Photoinitatoren die Härtungsreaktion starten können. Zum Beispiel könnte die intensive UV-A-Strahlung durch einen "verbotenen Übergang" des Photoinitiators wirken.

Offenzeit:

Unter Offenzeit wird die maximal mögliche Zeitdauer zwischen Entnahme vom Bestrahlungsband (UV-C) bzw. Entnahme aus der Bestrahlungskammer (UV-A) und dem Zeitpunkt der Fügung mit dem zweiten Substrat verstanden. In dieser Zeit können die Fügeteile gefügt werden. Sie ist so definiert, dass in dieser Zeit die Klebeschicht noch haftklebrig (tackig) ist. Die Offenzeit wird bestimmt, in dem bei den klebenden Filmen die Klebrigkeit ihrer Oberfläche nach der Bestrahlung mit dem Finger geprüft wird. Direkt nach der Bestrahlung ist der klebende Film noch tackig. Nach einer gewissen Zeit ist eine spürbare Abnahme der Tackigkeit zu bemerken, die dann schnell bis schließlich hin zu einer tackfreien Oberfläche abfällt. Die Offenzeit wird festgemacht an dem Zeitpunkt, bei dem die Tackigkeit merklich abnimmt. Es zeigt sich, dass, solange die Oberflächen noch klebrig sind, ein Fügen möglich ist und die anschließende Aushärtung zu einer homogene Klebeverbindung führt. Sobald die Oberflächen an Tack verlieren, ist der Aushärtevorgang schon so weit fortgeschritten, dass ein Fügen nicht mehr möglich ist. Dies zeigt sich dann in stark verringerten Festigkeitswerten, gemessen an der quasistatischen Zugscherfestigkeit. Die Fügung der klebenden Filme geschieht am Ende der Offenzeit.

Zeit bis zur Handhabungsfestigkeit:

Darunter versteht man die Zeitspanne, die nach dem Fügen verstreicht, bis die Festigkeit der Verbindung so hoch ist, dass geklebte Teile schon transportiert und weiterverarbeitet werden können. Hier gehen wir davon aus, dass die Handhabungsfestigkeit dann erreicht ist, wenn die Quasistatische Zugscherfestigkeit zwei Megapascal erreicht. Das ist eine Festigkeit, die genügend Spielraum lässt für die Belastungen in einem industriellen Fertigungsprozess.

Aushärtezeit:

Die Aushärtezeit ist der Zeitraum zwischen der Fügung und der endgültigen Festigkeit. Alle Beispielrezepturen sind spätestens nach 24 Stunden vollständig ausgehärtet. Deshalb wurde meist 24 Stunden gewartet bis zur Messung der Quasistatischen Zugscherfestigkeit. Bei einem Wert von über circa 6 MPa spricht man von einer strukturellen Festigkeit oder strukturellen Klebung.

Für die Anwendung gewünscht ist eine ausreichende Offenzeit. Vorteilhaft ist ebenfalls eine schnelle Handhabungsfestigkeit, falls die Klebung schon bald nach der Fügung (z.B. beim Transport der Teile) einer ersten Belastung standhalten muss, beziehungsweise um auf das Fixieren der Teile verzichten zu können. Für die vollständige Aushärtung sind dagegen 24 Stunden ausreichend, da erfahrungsgemäß erst nach dieser Zeit eine endgültige Belastung der Klebung erfolgt (Dauerbelastung oder Schockbelastung).

Offenzeit und Aushärtezeit sind Folgen der Reaktionsgeschwindigkeit der Aushärtereaktion. Diese Reaktion beginnt mit der UV-Aktivierung und endet mit der vollständigen Aushärtung des klebenden Films. Die Aushärtung ist dann vollständig, wenn die Endfestigkeit der Klebeverbindung erreicht ist. Während der Offenzeit und Aushärtezeit können verschiedene Phasen mit unterschiedlichen Reaktionsgeschwindigkeiten ablaufen, es kann zu Verzögerungen und Beschleunigungen kommen, so dass insgesamt eine bestimmte Offenzeit und Aushärtezeit resultieren. Über die Rezeptur, die Bestrahlungsart, -Intensität und -dauer und über das Wärmemanagement (Temperaturen) im Verklebungsprozess können Offenzeit und Aushärtezeit gesteuert werden. 3. Prüfmethoden

a) Quasistatische Zugscherprüfung

Nach der Aushärtung werden die Prüflinge einer Quasistatischen Zugscherprüfung unterzogen. Die Prüflinge werden hergestellt und ausgehärtet wie oben beschrieben (Substrate: GFK). Nach einer Lagerzeit von 24 h zur vollständigen Aushärtung werden die Prüflinge in eine Zugprüfmaschine eingehängt und bei Raumtemperatur mit einer Geschwindigkeit von 2 mm/min auseinander gezogen. Die Maximalkraft der Kraft-Wege-Kurve, im Verhältnis zur Verklebungsfläche (312 mm$^2$) wird als Zugscherwert in N/mm$^2$ oder MPa angegeben. Die angegebenen Werte sind das Mittel aus 3 Messungen.

b) Bestimmung der Offenzeit

Der haftklebrige Film wird in eine Größe von ca. 312 mm$^2$ (25 mm breit, 12,5 mm tief) auf das erste Substrat (Platte aus glasfaserverstärktem Kunststoff GFK, 100 mm lang, 25 mm breit, 2 mm dick) aufgeklebt. Anschließend wird die silikonisierte Polyesterfolie abgezogen. Dieses Substrat wird dann mit UV-Licht bestrahlt. Direkt nach der Bestrahlung wird die Zeit gestartet. Das Substrat wird außerhalb des Bereiches des UV-Lichtes bei Raumtemperatur im Labor gelagert. Mit dem Finger wird nun in sinnvollen Zeitabständen geprüft, ob der klebende Film noch tackig ist. Zunächst ist er noch tackig, aber nach einer gewissen Zeit nimmt der Tack merklich ab, bis er ganz verschwindet. Mit dem Finger wird immer wieder eine frische Stelle des klebenden Films untersucht. Sobald der Tack abnimmt, wird die Zeit gestoppt. Die Offenzeit ist dann derjenige Zeitpunkt, bei dem noch keinerlei Tackverlust spürbar ist. Sie wird als Mittelwert aus 3 Einzelproben bestimmt.

Für die Fügung zur Messung der Verbundfestigkeit werden weitere Prüflinge der gleichen Art bestrahlt und dann vor dem Ende der vorher bestimmten Offenzeit gefügt.

c) Bestimmung der Zeit bis zur Handhabungsfestigkeit

Für die Bestimmung der Zeit bis zur Handhabungsfestigkeit wird die Verbindungsfestigkeit an mehreren Prüflingen während der Aushärtung verfolgt. Je nach Aushärtegeschwindigkeit findet ein schneller oder ein langsamer Aufbau der Verbindungsfestigkeit statt. Anhand der Messung der Quasistatischen Zugscherfestigkeit ergibt sich als Handlingszeit die Zeit, die bis zur Erreichung eines Wertes von 2 MPa verstreicht. Figur 1 zeigt den Kurvenverlauf der Aushärtung bei zwei verschiedenen Rezepturen, wobei die eine Rezeptur schnell (obere Kurve) und die andere langsam aushärtet (untere Kurve). Bei den Rezepturen liegt die Zeit bis zur Handhabungsfestigkeit unterhalb des Dreifachen der Offenzeit.

d) Berechnung des Anteils einer Gruppe von Epoxidharzen am Epoxidäquivalent

Das Epoxidäquivalent $EP_{ges}$ einer Rezeptur errechnet sich aus den Epoxidäquivalenten $EP_i$ der einzelnen Epoxidharze und ihrem jeweiligen Gewichtsanteil $a_i$ in der Rezeptur gemäß der folgenden Gleichung:

$$EPges = \sum_{i=1}^{n}(a_i \times EP_i) \text{ mit n=Anzahl der Epoxidharze und } \sum_{i=1}^{n}(a_i) = 1$$

Der Anteil der cycloaliphatischen Harze (cyc) am Epoxidäquivalent berechnet sich nach:

$$A_{cyc} = a_{cyc} \times EP_{cyc} / EP_{ges}$$

Entsprechend berechnet sich der Anteil der aromatischen (arom) Epoxidharze nach:

$$A_{arom} = a_{arom} \times EP_{arom} / EP_{ges}$$

Entsprechend berechnet sich der Anteil der epoxidierten Polyetherverbindungen nach:

$$A_{ether} = a_{ether} \times EP_{ether} / EP_{ges}$$

Beispiele:

Im Folgenden sind die Beispiel- und Vergleichsbeispielrezepturen angegeben. Es sind nur die "festen" Gewichtsanteile der Klebemassen in Prozent angegeben ohne Berücksichtigung der Lösemittel. Die Herstellung und Beschichtung mittels geeigneter Lösemittel werden wie oben beschrieben vorgenommen und sind dem Fachmann bekannt. Ebenso könnte die Herstellung und Beschichtung auch ohne Lösemittel als sogenannter Hotmelt erfolgen. Als Substrat wird, wie beschrieben, glasfaserverstärkter Kunststoff (GFK) verwendet. Die Bestrahlung erfolgt mit der UV-C-Lampe.

a) Anteil an cycloaliphatischem Epoxidharz

Als Beispiel für ein cycloaliphatisches Epoxidharz wird Uvacure 1534 eingesetzt. Als Filmbildner dient Desmomelt 530, die aromatischen Epoxidharze sind Araldite GT 7072 und D.E.R. 331. Die Rezepturen enthalten ferner die epoxidierte Polyetherverbindung D.E.R. 736 P und das Polyol PEG 400. Hinzu kommt der UV-Initiator Chivacure 1176.
Beispiele B1 bis B7 zeigen verschiedene Gehalte an cycloaliphatischem Epoxidharz.
Das Epoxidäquivalent $EP_{ges}$ wird nach obiger Formel berechnet und beträgt im Mittel 200 g/eq. Der Anteil des cycloaliphatischen Epoxidharzes (hier: Uvacure 1534) $A_{cyc}$ wird dann nach obiger Formel berechnet. Entsprechend wird der Anteil an aromatischem Epoxidharz $A_{arom}$ über den Anteil der aromatischen Harze Araldite GT 7072 und D.E.R. 331 berechnet. Ebenso der Anteil an epoxidierter Polyetherverbindung (hier D.E.R. 736 P) $A_{ether}$.

Tabelle 1: Rezepturen B1 bis B7

| | B1 | B2 | B3 | B4 | B5 | B6 | B7 |
|---|---|---|---|---|---|---|---|
| Desmomelt 530 | 11% | 11% | 11% | 11% | 11% | 11% | 11% |
| Araldite GT 7072 | 38% | 38% | 38% | 38% | 38% | 38% | 38% |
| D.E.R. 736 P | 12% | 12% | 12% | 12% | 12% | 12% | 12% |
| D.E.R. 331 | 30% | 25% | 20% | 15% | 10% | 0% | 0% |
| Uvacure 1534 | 0% | 5,0% | 10% | 15% | 20% | 30% | 40% |
| PEG 400 | 7,0% | 7,0% | 7,0% | 7,0% | 7,0% | 7,0% | 7,0% |
| Chivacure 1176 | 2,0% | 2,0% | 2,0% | 2,0% | 2,0% | 2,0% | 2,0% |
| Epoxidäquivalent in g/eq | 371 | 372 | 373 | 374 | 375 | 377 | 357 |
| $A_{arom}$ | 93% | 90% | 86% | 83% | 80% | 73% | 69% |
| $A_{cyc}$ | 0% | 3% | 7% | 10% | 13% | 20% | 25% |
| $A_{ether}$ | 7% | 7% | 7% | 7% | 7% | 7% | 6% |

Der Anteil des cycloaliphatischen Epoxidharzes Acycergibt sich zu 0 bis 25 %. Entsprechend berechnet sich der Anteil an aromatischem Epoxidharz $A_{arom}$ zu 93 % bis 69 %. Der Anteil der epoxidierten Polyetherverbindung $A_{ether}$ liegt bei 7 %.

Tabelle 2: Messergebnisse B1 bis B7

|  | B1 | B2 | B3 | B4 | B5 | B6 | B7 |
|---|---|---|---|---|---|---|---|
| Offenzeit | 30 min | 20 min | 15 min | 10 min | 5 min | 4 min | 2 min |
| Zeit bis zur Handhabungsfestigkeit | 50 min | 45 min | 30 min | 20 min | 12 min | 10 min | 5 min |
| Quasistat. Zugscherfestigkeit | 18,7 MPa | 15,3 MPa | 15,5 MPa | 17,1 MPa | 18,0 MPa | 14,0 MPa | 13,1 MPa |

Die Ergebnisse in Tabelle 1 und 2 zeigen, dass die Zusammensetzung der Epoxidharze die Offenzeit bestimmt. Bei Rezepturen ohne cycloaliphatisches Epoxidharz (B1) liegt die Offenzeit bei 30 Minuten. Erhöht man den Anteil des cycloaliphatischen Harzes Uvacure 1534, so sinkt die Offenzeit, bis sie bei 25 % Anteil nur noch 2 Minuten beträgt. Entsprechend etwas höher liegen die Zeiten bis zur Handhabungsfestigkeit. Grundsätzlich hilft aber ein hoher Anteil an aromatischen Epoxidharzen, die Offenzeit hoch zu halten. Es hat sich gezeigt, dass ein hoher Anteil von aromatischem Epoxidharz am Epoxidäquivalent vorteilhaft ist, bevorzugt von größer als 60 %, um eine hohe Offenzeit zu erreichen.

Wie aus der Tabelle ersichtlich ergibt sich bei B1 bis B7 eine strukturelle Verklebung (Wert ist größer als 6 MPa). Es ist nicht notwendig, die schon gefügten Substrate die ganze Zeit zu bestrahlen. Vielmehr reicht es aus, die Klebefläche vor der Fügung einige Sekunden zu bestrahlen. Danach kann man den klebenden Film noch fügen. Er ist noch haftklebrig und benetzt das zweite Substrat ausreichend. Diese Fügung muss auch nicht in Sekunden erfolgen. Die Rezeptur kann so eingestellt werden, dass eine Offenzeit im Bereich von Minuten möglich ist. Nach der Offenzeit wird gefügt und es entsteht ohne weitere Bestrahlung oder Erwärmung eine strukturelle Klebeverbindung. Durch diese Offenzeit ist es möglich, mit dem klebende Film auch Substrate unabhängig von deren Durchlässigkeit für UV-Licht zu fügen.

b) Gehalt an epoxidierter Polyetherverbindung und Polyolverbindung

Beispiele B8 bis B11 zeigen die Bedeutung der epoxidierten Polyetherverbindung in der Rezeptur. Als epoxidierte Polyetherverbindung wurde das D.E.R. 736 P eingesetzt.

Tabelle 3: Rezepturen B8 bis B11

|  | B8 | B9 | B10 | B11 |
|---|---|---|---|---|
| Desmomelt 530 | 11% | 11% | 11% | 11% |
| Araldite GT 7072 | 45% | 45% | 45% | 45% |
| D.E.R. 331 | 0% | 0% | 36% | 45% |
| D.E.R. 736 P | 42% | 36% | 0% | 0% |
| PEG 400 | 0% | 6,0% | 6,0% | 0% |
| Chivacure 1176 | 2% | 2% | 2% | 2% |
| $A_{arom}$ | 78% | 81% | 100% | 100% |
| $A_{cyc}$ | 0% | 0% | 0% | 0% |
| $A_{ether}$ | 22% | 19% | 0% | 0% |

Tabelle 4: Messergebnisse B8 bis B1 1

|  | B8 | B9 | B10 | B11 |
|---|---|---|---|---|
| Offenzeit | 35 min | 35 min | 10 min | < 10 Sekunden |
| Quasistat. Zugscherfestigkeit | 16,5 MPa | 14,1 MPa | 4,2 MPa | 1,9 MPa |

Durch das D.E.R 736 P können die längeren Offenzeiten erreicht werden, ob mit oder ohne Polyethylenglykol. Bei Abwesenheit von D.E.R. 736 kann das Polyol zwar die Offenzeit verlängern, aber insgesamt sind die Zeiten kürzer und es entsteht (bei B11) keine strukturelle Verbindungsfestigkeit. Insofern ist die epoxidfunktionalisierte Polyetherverbindung vorteilhaft für die Eigenschaften des Klebebandes.

Neben dem D.E.R. 736 P können auch weitere epoxidierte Polyetherverbindungen wie Araldite DY 3601 (Fa. Huntsman) und Heloxy Modifier WF (Fa. Hexion) die gleiche Aufgabe erfüllen.

c) Gehalt an Polyol

In Beispielen B12 bis B19 wurde der Anteil an Polyol (hier: PEG 400) variiert bei konstantem, mittlerem Anteil von cycloaliphatischem Harz und einem nur 12%igen Anteil von D.E.R. 736 P in der Rezeptur.

Tabelle 5: Rezepturen B12 bis B19

|  | B12 | B13 | B14 | B15 | B16 | B17 | B18 | B19 |
|---|---|---|---|---|---|---|---|---|
| Desmomelt 530 | 11% | 11% | 11% | 11% | 11% | 11% | 11% | 11% |
| Araldite GT 7072 | 38% | 38% | 38% | 38% | 38% | 38% | 38% | 38% |
| D.E.R. 736 P | 12% | 12% | 12% | 12% | 12% | 12% | 12% | 12% |
| D.E.R. 331 | 22% | 20% | 18% | 16% | 15% | 14% | 12% | 7% |
| Uvacure 1534 | 15% | 15% | 15% | 15% | 15% | 15% | 15% | 15% |
| PEG 400 | 0% | 2,0% | 4,0% | 6,0% | 7,0% | 8,0% | 10% | 15% |
| Chivacure 1176 | 2% | 2% | 2% | 2% | 2% | 2% | 2% | 2% |
| $A_{arom}$ | 84% | 83% | 83% | 83% | 83% | 83% | 83% | 83% |
| $A_{cyc}$ | 10% | 10% | 10% | 10% | 10% | 10% | 10% | 10% |
| $A_{ether}$ | 6% | 7% | 7% | 7% | 7% | 7% | 7% | 7% |

Tabelle 6: Messergebnisse B12 bis B19

|  | B12 | B13 | B14 | B15 | B16 | B17 | B18 | B19 |
|---|---|---|---|---|---|---|---|---|
| Offenzeit | 30 Sekunden | 3 min | 8 min | 15 min | 10 min | 20 min | 25 min | 45 min |
| Quasistat. Zugscherfestigkeit | 2,2 MPa | 8,3 MPa | 10,4 MPa | 10,3 MPA | 17,1 MPa | 17,1 MPa | 16,7 MPa | 15,5 MPa |

Es zeigt sich, dass eine Erhöhung des Anteils der Polyolverbindung zu einer höheren Offenzeit führt. Eine Verringerung des Polyolanteils auf null führt zu kurzen Offenzeiten. Sie sind zu kurz, um noch eine strukturelle Verbindung ausbilden zu können (siehe B 12).

Beispiele B1 bis B19 zeigen, dass durch die Variation der Anteile an aromatischem Epoxidharz, cycloaliphatischem Epoxidharz, epoxidierte Polyetherverbindung und Polyol in den bevorzugten Grenzen die Offenzeit zwischen 10 Sekunden und 60 Minuten variiert werden kann.

d) Filmbildner und UV-Initiatoren

Als Filmbildner können Polymere aus Ethylenvinylacetat (EVA), Polyamid (PA), Polyurethan (PU), Acrylat oder ein Phenoxyharz verwendet werden. Beispiele B20 bis B24 zeigen Rezepturen mit verschiedenen Filmbildnern. Der Anteil an epoxidierter Polyetherverbindung ist mit 33 bis 35% hoch, so dass auch ohne Polyol ausreichend lange Offenzeiten (10 Sekunden bis 60 Minuten) und strukturelle Verklebungsfestigkeiten entstehen.

Tabelle 7: Rezepturen der Beispiele B20 bis B24

|  | B20 | B21 | B22 | B23 | B24 |
|---|---|---|---|---|---|
| Filmbildner | 13,6% Levamelt 900 | 11,4% Desmomelt 530N | 13,6% Phenoxyresin PKHM-301 | 20,5% Levamelt 900 | 27,8% Levamelt 456 |
| Araldite GT 7072 | 48,1% | 52,6% | 48,1% | 41,2% | 37% |
| D.E.R. 736 P | 35,2% | 33% | 35,2% | 35,2% | 32,2% |
| Chivacure 1176 | 3,1% | 3,1% | 3,1% | 3,1% | 3,0% |
| Epoxidäquivalent in g/eq | 409 | 424 | 409 | 393 | 391 |
| $A_{arom}$ | 82% | 84% | 82% | 79% | 79% |
| $A_{cyc}$ | 0% | 0% | 0% | 0% | 0% |
| $A_{ether}$ | 18% | 16% | 18% | 21% | 21% |

Tabelle 8: Messergebnisse B20 bis B24

|  | B20 | B21 | B22 | B23 | B24 |
|---|---|---|---|---|---|
| Offenzeit | 30 min | 25 min | 30 min | 30 min | 20 min |
| Quasistat. Zugscherfestigkeit nach 24h | 13,4 MPa | 14,9 MPa | 12,9 MPa | 11,2 MPa | 13,3 MPa |

Es wurden verschiedene UV-Initiatoren eingesetzt, auf unterschiedlicher chemischer Basis, mit und ohne Photosensitizer. Dabei zeigt sich (s. Tabellen 9 und 10), dass die Art des UV-Initiators einen Einfluss auf die Offenzeit hat. Die bevorzugten Offenzeiten von 10 Sekunden bis 60 Minuten können aber mit verschiedenartigen UV-Initiatoren erreicht werden.

Tabelle 9: Rezepturen der Beispiele B25 bis B29

|  | B25 | B26 | B27 | B28 | B29 |
|---|---|---|---|---|---|
| Desmomelt 530 | 11,5% | 11,5% | 11,5% | 11,5% | 11,5% |
| Araldite GT 7072 | 53,0% | 53,1% | 53,1% | 53,1% | 53,1% |
| D.E.R. 736 P | 33,5% | 33,0% | 33,4% | 31,5% | 33,1% |
| UV-Initiator | 2,0% Chivacure 1176 | 2,4% Chivacure 1190 | 2,0% Omicat 432 | 3,9% Omicat 550 BL | 2% UV 387 C + 0,3% Chivacure ITX |
| $A_{arom}$ | 84% | 84% | 84% | 85% | 84% |
| $A_{cyc}$ | 0% | 0% | 0% | 0% | 0% |
| $A_{ether}$ | 16% | 16% | 16% | 15% | 16% |

Tabelle 10: Messergebnisse B25 bis B29

|  | B25 | B26 | B27 | B28 | B29 |
|---|---|---|---|---|---|
| Offenzeit | 35 min | 30 min | 35 min | 60 min | 45 min |
| Quasistat. Zugscherfestigkeit nach 24h | 13,6 MPa | 14,7 MPa | 11,8 MPa | 12,1 MPa | 17,5 MPa |

Erwartungsgemäß spielt auch die Menge des eingesetzten UV-Initiators eine Rolle. Wie zu erwarten, sinkt mit steigender Initiatorkonzentration die Offenzeit (s. Tabellen 11 und 12), wobei in einem weiten Bereich noch strukturelle Verklebungsfestigkeiten erreicht werden. Wiederum werden hohe Offenzeiten durch einen hohen Anteil an D.E.R. 736 P erreicht. Das Einstellen der Offenzeit hin zu kürzeren und damit schneller aushärtenden Rezepturen könnte jetzt noch mit einer Zugabe von cycloaliphatischem Epoxidharz gemäß Beispielen B1 bis B7 erfolgen.

Tabelle 11: Rezepturen der Beispiele B30 bis B34

|  | B30 | B31 | B32 | B33 | B34 |
|---|---|---|---|---|---|
| Desmomelt 530 | 11,6% | 11,5% | 11,5% | 11,4% | 11,2% |
| Araldite GT 7072 | 53,7% | 53,3% | 53,0% | 52,5% | 51,8% |
| D.E.R. 736 P | 33,6% | 33,4% | 33,2% | 33,0% | 32,5% |
| Chivacure 1176 | 1,2% | 1,7% | 2,3% | 3,1% | 4,5% |

Tabelle 12: Messergebnisse B30 bis B34

|  | B30 | B31 | B32 | B33 | B34 |
|---|---|---|---|---|---|
| Offenzeit | 60 min | 45 min | 35 min | 25 min | 15 min |
| Quasistat. Zugscherfestigkeit nach 24h | 13,9 MPa | 13,8 MPa | 13,6 MPa | 14,9 MPa | 15,4 MPa |

e) UV-Dosis

Die Offenzeit kann auch mit der Regulierung der UV-Dosis verändert werden. Eine Rezeptur (B27, bestehend aus 11,5 % Desmomelt 530, 53,1 % Araldite GT 7072, 16,1 % D.E.R. 736 P, 17,1 % Uvacure 1534 und 2,3 % Chivacure 1176) wird mit unterschiedlichen UV-Dosen bestrahlt (s. Tabelle 13).

Tabelle 13: Messergebnisse B27

| UV-Dosis (UV-C-Lampe) in mJ/cm$^2$ | 270 | 197 | 125 | 93 | 76 | 47 |
|---|---|---|---|---|---|---|
| Offenzeit in min | 0,5 | 1 | 1,5 | 3 | 5 | 10 |

f) Lagerstabilität

Die Lagerbeständigkeit der Klebebänder (vor Verklebung) wird anhand eines Musters des Beispiels 30 ermittelt, das lichtdicht in einem Aluminiumbeutel verpackt wird. Die Lagerung findet bei Raumtemperatur statt. Auch nach 6 Monaten Lagerzeit ist eine ausreichend lange Offenzeit und eine strukturelle Verklebungsfestigkeit erhalten.

Tabelle 14: Messergebnisse Lagerung von B30

| Lagerzeit | Frisch | 2 Monate | 6 Monate |
|---|---|---|---|
| Offenzeit | 60 min | 60 min | 50 min |
| Quasistat. Zugscherfestigkeit nach 24h | 13,9 MPa | 13,8 MPa | 12,0 MPa |

**Patentansprüche**

1. Wickel- und stanzbarer klebender Film mit einer durch UV-Strahlung aktivierbaren Klebmasse auf Basis Epoxid, wobei die Klebmasse umfasst:

   a) 2 - 40 Gew.-% Filmbildner,
   b) 10 - 70 Gew.-% aromatische Epoxidharze,
   c) cycloaliphatische Epoxidharze, wobei die cycloaliphatischen Epoxidharze 35 Gew.-% nicht überschreiten,
   d) 0 - 50 Gew.-% epoxidierter Polyetherverbindungen,
   e) 0 - 20 Gew.-% Polyol und

f) 0,5 - 7 Gew.-% kationischer Initiator,

wobei sich die Anteile zu 100% addieren,
und wobei die Klebmasse nach der UV-Aktivierung eine Offenzeit von 10 Sekunden bis 60 Minuten aufweist, während der der Film eine haftklebende Eigenschaft aufweist, **dadurch gekennzeichnet, dass** der Anteil des Epoxidäquivalents der cycloaliphatischen Epoxidharze am Epoxidäquivalent aller Epoxidharze maximal bei 25% liegt und die Klebmasse mindestens 42 Gew.-% der epoxidierten Polyetherverbindungen umfasst, oder die Klebmasse mindestens 6 Gew.-% des Polyols umfasst, oder die Klebmasse mindestens 12 Gew.-% der epoxidierten Polyetherverbindungen sowie mindestens 2 Gew.-% des Polyols umfasst.

2. Wickel- und stanzbarer klebender Film gemäß Anspruch 1, **dadurch gekennzeichnet, dass** die Zeit bis zur Handhabungsfestigkeit nicht mehr als das Dreifache der Offenzeit beträgt.

3. Wickel- und stanzbarer klebender Film gemäß einem der vorhergehenden Ansprüche, **dadurch gekennzeichnet, dass** der Anteil des Epoxidäquivalents der epoxidierten Polyetherverbindungen am Epoxidäquivalent aller Epoxidharze zwischen 0 und 40% beträgt.

4. Wickel- und stanzbarer klebender Film gemäß einem der vorhergehenden Ansprüche, **dadurch gekennzeichnet, dass** der Anteil des Epoxidäquivalents der aromatischen Epoxidharze am Epoxidäquivalent aller Epoxidharze über 60% liegt.

5. Wickel- und stanzbarer klebender Film gemäß einem der vorhergehenden Ansprüche, **dadurch gekennzeichnet, dass** der Filmbildner Polymere aus Ethylenvinylacetat (EVA), Polyamid (PA), Polyurethan (PU), Acrylat oder ein Phenoxyharz umfasst.

6. Wickel- und stanzbarer klebender Film gemäß einem der vorhergehenden Ansprüche, **dadurch gekennzeichnet, dass** der vernetzungsinitiierende kationische Initiator ausgewählt ist aus Arylsulfoniumsalzen, Iodoniumsalzen und Thioxantheniumsalzen.

7. Wickel- und stanzbarer klebender Film gemäß einem der vorhergehenden Ansprüche, **dadurch gekennzeichnet, dass** der Initiator durch UV-Licht aktiviert wird, bevorzugt durch UVA- oder UVC-Licht

8. Wickel- und stanzbarer klebender Film gemäß einem der vorhergehenden Ansprüche, **dadurch gekennzeichnet, dass** der Film zur strukturellen Verklebung von Metallen, Glas, Keramiken, GFK, CFK und weiteren höher energetischen Oberflächen geeignet ist.

## Claims

1. An adhesive film adapted to be wound and stamped, the adhesive film including an epoxy-based adhesive compound that can be activated by UV radiation, wherein the adhesive compound comprises:

   a) 2-40 wt % of film former,
   b) 10-70 wt % of aromatic epoxy resins,
   c) cyclo-aliphatic epoxy resins, the cyclo-aliphatic epoxy resins not exceeding 35 wt %,
   d) 0-50 wt % of epoxy-enhanced polyether compounds,
   e) 0-20 wt % of polyol, and
   f) 0.5-7 wt % of cationic initiators,
   the proportions adding up to 100%,
   and the adhesive compound has an open time of 10 seconds to 60 minutes after the UV activation, during which open time the film has a pressure-sensitive adhesive characteristic, **characterized in that** the share of an epoxy equivalent of the cyclo-aliphatic epoxy resins in the epoxy equivalent of all the epoxy resins is at most 25 % and the adhesive compound comprises at least 42 wt % of the epoxy-enhanced polyether compounds, or the adhesive compound comprises at least 6 wt % of the polyol, or the adhesive compound comprises at least 12 wt % of the epoxy-enhanced polyether compounds as well as at least 2 wt % of the polyol.

2. The adhesive film of claim 1, wherein the adhesive film has a time until handling strength that does not exceed triple the open time.

3. The adhesive film of one of the preceding claims, wherein a share of an epoxy equivalent of the epoxy-enhanced polyether compounds in the epoxy equivalent of all the epoxy resins is between 0 and 40%.

4. The adhesive film of one of the preceding claims, wherein a share of an epoxy equivalent of the aromatic epoxy resins in the epoxy equivalent of all epoxy resins is above 60%.

5. The adhesive film of one of the preceding claims, wherein a film former comprises polymers of ethylene vinyl acetate (EVA), polyamide (PA), polyurethane (PU), acrylate or a phenoxy resin.

6. The adhesive film of one of the preceding claims, wherein the crosslink initiating cationic initiator is selected from arvlsulfonium salts, iodonium salts and thioxanthenium salts.

7. The adhesive film of one of the preceding claims, wherein the cationic initiator is activated by UV light, preferably UVA light or UVC light.

8. The adhesive film of one of the preceding claims, wherein the film is adapted for structural bonding of metals, glass, ceramics, GFRP, CFRP, and high-energy surfaces.


**Revendications**

1. Une bande auto-adhésive adaptée pour être enroulée et poinçonnée, la bande auto-adhésive comprenant un adhésif à base d'époxy pouvant être activé par irradiation UV, pour lequel l'adhésif contient :

   a) 2-40 wt % de composants formant un film,
   b) 10-70 wt % de résines époxy aromatiques,
   c) Des résines époxy cyclo-aliphatiques, ces résines époxy cyclo-aliphatiques n'excédant pas 35 wt %,
   d) 0-50 wt % de composés polyéthers renforcés par époxy
   e) 2-20 wt % de polyols, et
   f) 0.5-7 wt % d'amorceurs cationiques, les pourcentages s'additionnant pour donner 100 %,

   et l'adhésif a un temps ouvert de 10 secondes à 60 minutes après l'activation par UV, temps durant lequel le film a les caractéristiques d'un adhésif sensible à la pression, **caractérisé en ce que** la proportion d'un équivalent époxy des résines époxy cyclo-aliphatiques par rapport à l'équivalent époxy de toutes les résines époxy est au plus 25 % et l'adhésif contient au moins 42 wt % des composés polyéthers renforcés par époxy, ou l'adhésif contient au moins 6 wt % des polyols, ou l'adhésif contient au moins 12 wt % des composés polyéthers renforcés par époxy ainsi qu'au moins 2 wt % des polyols.

2. Une bande auto-adhésive selon la revendication 1, pour laquelle la bande auto-adhésive a un temps de fixation n'excédant pas trois fois le temps ouvert.

3. Une bande auto-adhésive d'une des précédentes revendications pour laquelle la partie de l'équivalent époxy des composés polyéthers renforcés par époxy par rapport à l'équivalent époxy de toutes les résines époxy est entre 0 et 40 %.

4. Une bande auto-adhésive d'une des précédentes revendications pour laquelle la partie de l'équivalent époxy des résines époxy aromatiques par rapport à l'équivalent époxy de toutes les résines époxy est supérieure à 60 %.

5. Une bande auto-adhésive d'une des précédentes revendications, pour laquelle les composants formant un film peuvent être de l'éthylène-acétate de vinyle (EVA), un polyamide (PA), un polyuréthane (PU), un acrylate ou une résine phénoxy.

6. Une bande auto-adhésive d'une des précédentes revendications, pour laquelle l'amorceur cationique de réticulation est choisi parmi les sels d'aryl sulfonium, les sels d'iodonium et les sels de thioxanthenium.

7. Une bande auto-adhésive d'une des précédentes revendications, pour laquelle l'amorceur cationique de réticulation est activé par la lumière UV, de préférence par la lumière UVA ou la lumière UVC.

8. Une bande auto-adhésive d'une des précédentes revendications, pour laquelle le film est adapté pour le lien structurel de métaux, de verres, de céramiques, de GFRP, de CFRP, et de surfaces à haute énergie.

**Fig. 1**

**EP 3 585 853 B1**

**IN DER BESCHREIBUNG AUFGEFÜHRTE DOKUMENTE**

**In der Beschreibung aufgeführte Patentdokumente**

- WO 2015198921 A1
- WO 2102173055 A1
- JP 05498870 B
- JP 2015057467 A
- CN 102708755 A
- JP 2009185219 A
- WO 1999057216 A1
- DE 19857237 A1

- EP 819746 B1
- EP 1249479 B1
- WO 2006029059 A1
- US 20050256230 A1
- US 20030176585 A1
- US 7053133 B2
- WO 2014047932 A1
- WO 2014093414 A1